# EUROPÄISCHE PATENTSCHRIFT

(11) **EP 0 503 533 B1**
(45) Veröffentlichungstag und Bekanntmachung des Hinweises auf die Patenterteilung: **11.10.1995**
(21) Anmeldenummer: 92103994.7
(22) Anmeldetag: 09.03.1992
(51) Int. Cl.: B29D 30/08

(54) **Verfahren und Vorrichtung zur Herstellung von Laufstreifen/Gürtelpaketen für Fahrzeugluftreifen**
Method and apparatus for the fabrication of tread and belt assemblies for vehicle tires
Procédé et dispositif de fabrication de bandes de roulement et de ceintures pour pneumatiques de véhicules

(30) Priorität: 14.03.1991 DE 4108261
(43) Veröffentlichungstag der Anmeldung: 16.09.1992
(73) Patentinhaber: Continental Aktiengesellschaft, 30165 Hannover (DE)
(72) Erfinder: Sergel, Horst, W-3000 Hannover (DE); Glinz, Michael, W-3057 Neustadt 1 (DE)

(56) Entgegenhaltungen:
- EP-A- 0 343 426
- EP-A- 0 414 554

## Beschreibung

Die Erfindung betrifft ein Verfahren zur Herstellung von Laufstreifen/Gürtelpaketen für Fahrzeugluftreifen, mit einer drehbaren Gürteltrommel, mit einem Gürtellagenzubringer für eine erste und eine zweite Gürteltage, mit einer Wickelbandagenzuführvorrichtung, mit einer Laufstreifenzuführvorrichtung und mit einer überführungsvorrichtung, sowie eine Vorrichtung zur Durchführung des Verfahrens.

In letzter Zeit sind unterschiedliche Verfahren zur Herstellung von Laufstreifen/Gürtelpaketen unter Verwendung von Gürtelabdecklagen in Form von Wickelbandagen bekannt geworden. Dabei besteht immer wieder das Problem, daß das Wickeln einer Bandage auf eine Gürteltrommel erheblich mehr Zeit in Anspruch nimmt als das Auflegen der einzelnen Gürtellagen bzw. des Laufstreifens, so daß sich die Taktzeiten erheblich erhöhen. Es sind bereits Verfahren bekannt, bei denen die Arbeitsschritte des Auflegens der Gürtellagen und des Wickelns der Bandage in der Weise entkoppelt worden sind, daß sie gleichzeitig erfolgen können. Hierfür benötigt man jedoch zwei vollständig separate Gürteltrommeln.

Der Erfindung liegt die Aufgabe zugrunde, ein Verfahren der eingangs genannten Art anzugeben, mit dem genügend Laufstreifen/Gürtelpakete auf einer einzigen Gürteltrommel in möglichst kurzer Zeit hergestellt werden können.

Diese Aufgabe wird erfindungsgemäß gelöst durch die Schritte
a) Abziehen einer ersten Gürtellage vom Gürtellagenzubringer und Auflegen auf eine erste Hälfte der Gürteltrommel in einer ersten Relativstellung zwischen Gürtellagenzubringer und Gürteltrommel, die zur Aufnahme von zwei Laufstreifen/Gürtelpaketen doppelt breit ausgebildet ist,
b) Verfahren der Gürteltrommel oder des Gürtellagenzubringers in eine zweite Relativstellung, so daß eine zweite Gürtellage auf dem Gürtellagenzubringer der ersten Hälfte der Gürteltrommel gegenübersteht,
c) Gleichzeitiges Auflegen der zweiten Gürtellage auf der ersten Hälfte der Gürteltrommel und einer ersten Gürtellage auf der zweiten Hälfte der Gürteltrommel,
d) Verfahren der Gürteltrommel oder des Gürtellagenzubringers in eine dritte Relativstellung, so daß die zweite Gürtellage auf dem Gürtellagenzubringer der zweiten Hälfte der Gürteltrommel gegenübersteht,
e) Abziehen der zweiten Gürtellage vom Gürtellagenzubringer und Auflegen auf der zweiten Hälfte der Gürteltrommel,
f) nach dem Auflegen beider Gürtellagen auf beide Hälften der Gürteltrommel erfolgt ein gleichzeitiges Spulen von zwei Wickelbandagen auf den beiden Hälften der Gürteltrommel,
g) nach dem Aufbringen der beiden Wickelbandagen werden zwei Laufstreifen nacheinander oder gleichzeitig auf die beiden Hälften der Gürteltrommel aufgebracht,
h) nach der Vervollständigung der beiden Laufstreifen/Gürtelpakete werden beide nacheinander oder gleichzeitig mittels einer überführungsvorrichtung von der Gürteltrommel entfernt.

Eine Vorrichtung zur Durchführung des Verfahrens ist durch die Merkmale des Patentanspruchs 7 definiert. Ein abgewandeltes Verfahren ist im Patentanspruch 14 enthalten, während Patentanspruch 15 die zugehörige Vorrichtung definiert.

Der Kerngedanke der Erfindung besteht darin, daß man das zeitintensive Wickeln der Gürtelabdeckbandagen in der Weise vornimmt, daß zwei Wickelbandagen gleichzeitig erzeugt werden. So erhält man den Vorteil, daß die Herstellungszeit pro Einzelbandage halbiert wird. Weitere Vorteile ergeben sich dadurch, daß zwei Gürtellagen und gegebenenfalls auch zwei Laufbänder gleichzeitig auf die Gürteltrommel aufgebracht werden können. Nach einer bevorzugten Anordnung kommt eine in drei Arbeitspositionen verfahrbare Gürteltrommel doppelter Breite zur Anwendung, in deren Nähe auf der einen Seite ein Gürtellagenzubringer für eine erste und eine zweite Gürtellage ortsfest angeordnet ist, während auf der anderen Seite eine Wickelbandagenzuführvorrichtung für zwei Wickelbandagen sowie eine Laufstreifenzuführvorrichtung nebeneinander ebenfalls ortsfest angeordnet sind. Das Verfahren läßt sich auch mit einer Anordnung durchführen, bei der die Gürteltrommel nicht axial verfahrbar ausgebildet ist, bei der sich weiterhin die Wickelbandagenzuführvorrichtung, die Laufstreifenzuführvorrichtung und der Gürtellagenzubringer in axialer Richtung im wesentlichen auf Höhe der Gürteltrommel und in Umfangsrichtung der Trommel versetzt zueinander befinden, wobei lediglich der Gürtellagenzubringer axial verfahrbar ausgebildet ist. Vorteilhafte Ausgestaltungen der Erfindung sind den Unteransprüchen zu entnehmen.

Nachfolgend wird ein Ausführungsbeispiel der Erfindung anhand einer Zeichnung näher erläutert.
Es zeigt in einer schematischen Darstellung
- Fig. 1: eine Anordnung mit einer Gürteltrommel doppelter Breite in einer ersten Betriebsposition,
- Fig. 2: die Anordnung der Fig. 1, jedoch mit der Gürteltrommel in der zweiten Betriebsposition,
- Fig. 3: die Anordnung der Fig. 1, jedoch mit der Gürteltrommel in der dritten Betriebsposition,

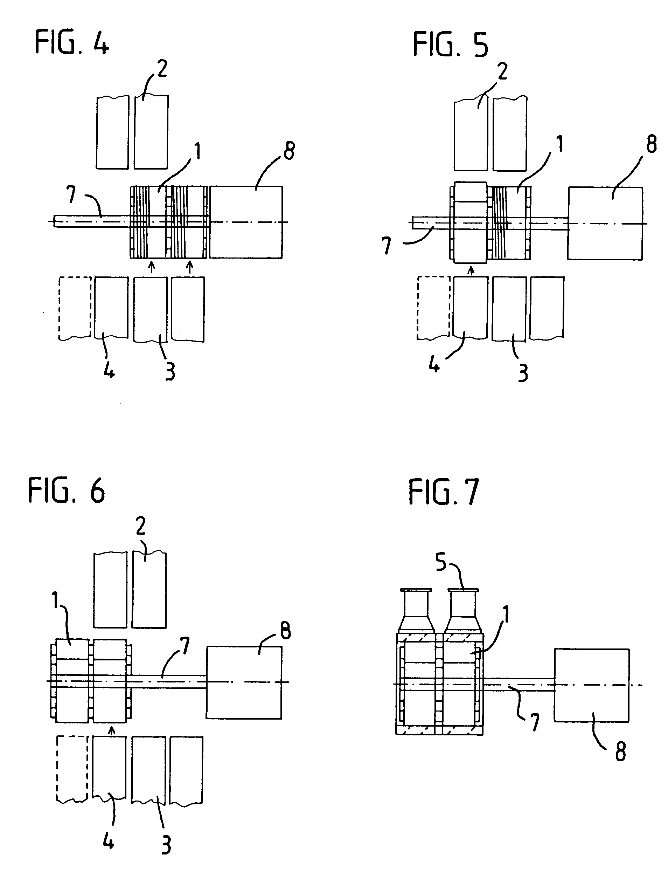

- Fig. 4: die Anordnung der Fig. 1 mit der Gürteltrommel in der dritten Betriebsposition zum Wickeln der Bandagen,
- Fig. 5: die Anordnung der Fig. 1 mit der Gürteltrommel in der zweiten Betriebsposition zum Auflegen eines ersten Laufstreifens,
- Fig. 6: die Anordnung der Fig. 1 mit der Gürteltrommel in der ersten Betriebsposition zum Auflegen des zweiten Laufstreifens,
- Fig. 7: die Anordnung der Fig. 1 mit der Gürteltrommel in der ersten Betriebsposition zum Entfernen der fertigen Laufstreifen/Gürtelpakete,
- Fig. 8: eine Gürteltrommel mit in Umfangsrichtung versetzt zueinander angeordneter Wickelbandagenzuführvorrichtung, Gürtellagenzuführvorrichtung und Laufstreifenzuführvorrichtung,
- Fig. 9: eine Anordnung wie in Fig. 8, jedoch mit zwei separaten, in Umfangsrichtung der Wickeltrommel versetzt zueinander angeordneten Gürtellagenzubringern.

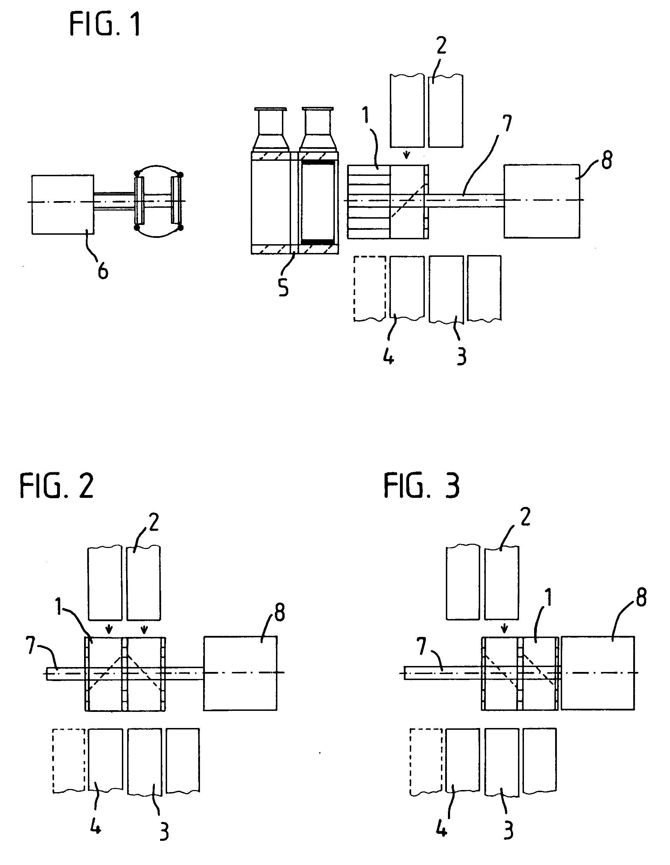

In Fig. 1 ist eine Anordnung mit einer Gürteltrommel 1, einem Gürtellagenzubringer 2, einer Wickelbandagenzuführvorrichtung 3, einer Laufstreifenzuführvorrichtung 4, einer überführungsvorrichtung 5 und einer Bombierstation 6 dargestellt. Die Gürteltrommel 1, die in üblicher Weise radial expandierbar ist, befindet sich auf einer Antriebswelle 7, die in einen Motor- und Getriebeblock 8 führt. Die Gürteltrommel 1 weist eine so große axiale Erstreckung auf, daß auf ihr zwei Laufstreifen/Gürtelpakete nebeneinander erzeugt werden können. In der Nähe der Gürteltrommel 1 befindet sich auf der einen Seite der Gürtellagenzubringer 2, der mit zwei Zuführbändern für eine erste Gürtellage und für eine zweite Gürtellage ausgestattet ist. Die Gürteltrommel 1 ist axial verschiebbar und befindet sich in Fig. 1 in einer ersten Betriebsposition, in der die rechte Hälfte der Gürteltrommel 1 auf axialer Höhe mit dem Zuführband für die erste Gürtellage steht. Die Gürteltrommel 1 ist in weitere Betriebspositionen verfahrbar, in denen die weiteren Elemente für zwei Laufstreifen/Gürtelpakete aufbringbar sind, wie weiter unten im einzelnen näher erläutert wird. Die überführungsvorrichtung 5 besteht vorliegend aus einem Doppeltransferring, der dazu dient, zwei fertige Laufstreifen/Gürtelpakete von der Gürteltrommel 1 aufzunehmen und der Bombierstation 6 zuzuführen, wo in üblicher Weise das Bombieren einer Karkasse in ein Laufstreifen/Gürtelpaket geschieht. Von dem Doppeltransferring wirkt der eine Ring als Speicher für ein Laufstreifen/Gürtellagenpaket.

Die Wickelbandagenzuführvorrichtung 3 ist als Zwillingsvorrichtung ausgebildet, so daß mit ihr gleichzeitig zwei gleiche Bandagenstreifen zum Erzeugen einer Wickelbandage der Gürteltrommel 1 zugeführt werden können. Dabei werden die Vorschubgeschwindigkeiten beim Wickeln der beiden Wickelbandagen mit üblichen Mitteln erzeugt. Links neben der Wickelbandagenzuführvorrichtung 3 befindet sich die Laufstreifenzuführvorrichtung, die ein Zuführband aufweisen kann oder aber auch als Zwillingsvorrichtung so ausgebildet sein kann, daß zwei Laufstreifen gleichzeitig zugeführt werden.

Nachfolgend wird das erfindungsgemäße Verfahren anhand der einzelnen Figuren näher erläutert. In der ersten Betriebsposition der Gürteltrommel 1 gemäß Fig. 1 wird eine erste Gürtellage vom linken Zuführband des Gürtellagenzubringers 2 abgezogen und in der rechten Hälfte der Gürteltrommel 1 aufgelegt. Danach wird die Gürteltrommel 1 in eine zweite Betriebsposition axial verfahren, in der nunmehr das Zuführband des Gürtellagenzubringers 2 mit einer zweiten Gürtellage der rechten Hälfte der Gürteltrommel 1 gegenübersteht, während das erste Zuführband sich auf Höhe der linken Hälfte der Gürteltrommel 1 befindet. In dieser zweiten Betriebsposition erfolgt das gleichzeitige Auflegen einer zweiten Gürtellage auf die bereits vorhandene erste Gürtellage in der rechten Hälfte der Trommel und einer ersten Gürtellage im Bereich der linken Hälfte der Gürteltrommel 1. Danach wird die Gürteltrommel 1 in ihre dritte Betriebsposition verfahren, in der ihre beiden Hälften sich auf Höhe der beiden Zuführeinheiten der Wickelbandagenzuführvorrichtung 3 befinden. Gleichzeitig steht in dieser Position das Zuführband mit der zweiten Gürtellage der linken Hälfte der Gürteltrommel 1 gegenüber. Es wird eine zweite Gürtellage von diesem Zuführband abgezogen und auf der ersten Gürtellage in der linken Hälfte der Gürteltrommel 1 positioniert. Nach der Vervollständigung der beiden Gürtellagen in den beiden Hälften der Gürteltrommel 1 erfolgt das gleichzeitige Spulen von zwei Wickelbandagen, wobei zwei Bandagenstreifen gleichzeitig von der Wickelbandagenzuführvorrichtung 3 abgezogen und auf den beiden Gürtellagenpaketen auf der Gürteltrommel 1 wendelförmig aufgewickelt werden. Dabei kann die Vorschubgeschwindigkeit bei Bedarf so steuerbar sein, daß benachbarte Streifen der Wickelbandage nebeneinander oder sich überlappend angeordnet werden.

Nach der Vervollständigung der beiden Wickelbandagen auf der Gürteltrommel 1 werden zwei Laufstreifen nacheinander oder gleichzeitig auf die beiden Hälften der Gürteltrommel 1 aufgebracht je nachdem, ob die Laufstreifenzuführvorrichtung 4 aus einem einzelnen Zuführband oder aus einem Zwillingsband besteht. Im Falle eines einzelnen Zuführbandes für den Laufstreifen wird die Gürteltrommel zunächst von der dritten Betriebsposition in die zweite verfahren, in der das Laufstreifenzuführband der linken Hälfte der Gürteltrommel gegenübersteht. In dieser Stellung wird ein Laufstreifen auf das Gürtellagenpaket in der linken Hälfte der Gürteltrommel 1 aufgebracht und anschließend die Gürteltrommel in die erste Betriebsposition verfahren, in der dann ein weiterer Laufstreifen auf das Gürtellagenpaket in der rechten Hälfte der Gürteltrommel 1 aufgebracht wird. Für den Fall, daß die Laufstreifenzuführvorrichtung 4 aus einem Zwillingsband mit zwei gleichzeitig zuführbaren Laufstreifen besteht, wird die Gürteltrommel 1 nach der Vervollständigung der Wickelbandagen in der dritten Betriebsposition sofort in die erste Betriebsposition verfahren, in der dann beide Laufstreifen gleichzeitig aufgelegt werden.

Nach der Vervollständigung der beiden Laufstreifen/Gürtelpakete fährt der Doppeltransferring der überführungsvorrichtung 5 axial über die Gürteltrommel und erfaßt beide Laufstreifen/Gürtelpakete bevorzugt gleichzeitig, so daß sie dann nacheinander der Bombierstation 6 zugeführt werden können, wobei zwischenzeitlich der eine Transferring als Speicher dient. Der erste Zyklus ist nunmehr beendet und die Gürteltrommel 1 befindet sich wieder in der Ausgangsstellung, in der ein zweiter Zyklus zum Erzeugen von zwei Laufstreifen/Gürtellagenpaketen beginnen kann.

Selbstverständlich kann man bei Bedarf die beschriebene Anordnung auch in der Weise abwandeln, daß statt einer Axialverschiebung der Gürteltrommel 1 der Gürtellagenzubringer 2 axial verschiebbar ausgebildet wird.

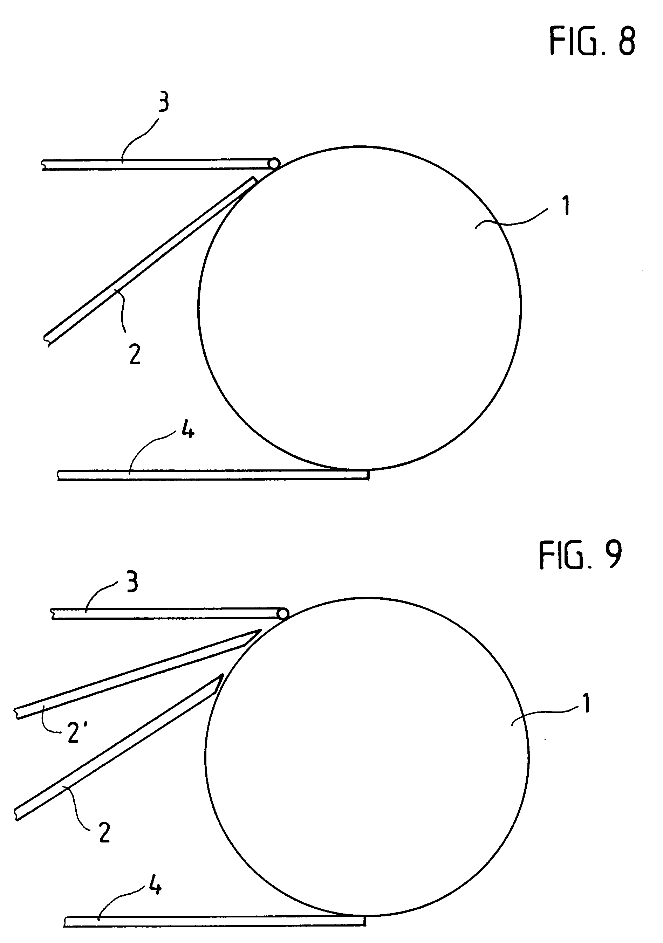

In Fig. 8 ist eine weitere Anordnung dargestellt, mit der ebenfalls zur Erzeugung von zwei Laufstreifen/Gürtellagenpaketen zwei Wickelbandagen gleichzeitig hergestellt werden können, wobei die Gürteltrommel 1 jedoch nicht axial verschiebbar ausgebildet sein muß, so daß alle Verfahrensschritte in der gleichen Betriebsposition der Trommel ausgeführt werden können. Hierzu ist es erforderlich, den Gürtellagenzubringer 2, die Wickelbandagenvorrichtung 3 und die Laufstreifenzuführvorrichtung 4 in axialer Richtung im wesentlichen auf gleicher Höhe zur Wickeltrommel 1 und in Umfangsrichtung der Trommel 1 versetzt zueinander anzuordnen. Während in axialer Richtung die Wickelbandagenzuführvorrichtung 3 und die Laufstreifenzuführvorrichtung 4 ortsfest positioniert sein können, ist es für den Gürtellagenzubringer 2 notwendig, daß er relativ zur Gürteltrommel 1 axial verfahrbar ausgebildet wird. In dem Beispiel der Fig. 8 befindet sich der Reifenwickler auf der rechten Seite, während auf der linken Seite oben die Wickelbandagenzuführvorrichtung 3 und darunter der Gürtellagenzubringer 2 angeordnet ist. Links unten befindet sich die Laufstreifenzuführvorrichtung 4 zum gleichzeitigen Zuführen von zwei Laufstreifen. Zum Erzeugen von zwei Laufstreifen/Gürtellagenpaketen werden zunächst wieder die einzelnen Gürtellagen in der im Beispiel 1 beschriebenen Weise aufgebracht, wobei nunmehr jedoch nicht die Gürteltrommel 1, sondern der Gürtellagenzubringer 2 axial verfahren wird. Nach dem Aufbringen der beiden Gürtellagen in den beiden Hälften der Gürteltrommel 1 erfolgt das gleichzeitige Wickeln von zwei Wickelbandagen und anschließend das gleichzeitige Aufbringen von zwei Laufstreifen. Für den Fall, daß ein Gürtel mehr als zwei Gürtellagen aufweisen soll, werden einzelne Verfahrensschritte zum Auflegen einer Gürtellage lediglich wiederholt.

Fig. 9 zeigt ein Beispiel ähnlich dem der Fig. 8 jedoch mit dem Unterschied, daß sogar auf die axiale Verfahrbarkeit des Gürtellagenzubringers 2 verzichtet werden kann. Die Wickelbandagenzuführvorrichtung 3 und die Laufstreifenzuführvorrichtung 4 sind in gleicher Weise angeordnet wie in Fig. 8. Zum Zuführen der Gürtellagen gibt es zwei Gürtellagenzubringer 2 und 2'. Jeder besitzt zwei nebeneinanderliegende Zuführbänder, die sich auf Höhe der beiden Hälften der Gürteltrommel 1 befinden. Die beiden Bänder des Zubringers 2 enthalten zwei erste Gürtellagen (mit einer ersten Steigung der Cordfäden). In den Bändern des Zubringers 2' befinden sich zweite Gürtellagen (mit der entgegengesetzten Steigung der Cordfäden). Zur gleichzeitigen Erzeugung zweier Laufstreifen/Gürtelpakete werden zunächst zwei erste Gürtellagen gleichzeitig aufgelegt, dann zwei zweite Gürtellagen. Danach erfolgt das gleichzeitige Wickeln zweier Wickelbandagen und schließlich das gleichzeitige Auflegen zweier Laufstreifen.

## Patentansprüche

1. Verfahren zur Herstellung von Laufstreifen/Gürtelpaketen für Fahrzeugluftreifen, mit einer drehbaren Gürteltrommel (1), mit einem Gürtellagenzubringer (2) für eine erste und eine zweite Gürtellage, mit einer Wickelbandagenzuführvorrichtung (3), mit einer Laufstreifenzuführvorrichtung (4) und mit einer Überführungsvorrichtung (5), gekennzeichnet durch die Schritte
a) Abziehen einer ersten Gürtellage vom Gürtel lagenzubringer (2) und Auflegen auf eine erste Hälfte der Gürteltrommel (1) in einer ersten Relativstellung zwischen Gürtellagenzubringer (2) und Gürteltrommel (1), die zur Aufnahme von zwei Laufstreifen/Gürtelpaketen doppelt breit ausgebildet ist,
b) Verfahren der Gürteltrommel (1) oder des Gürtellagenzubringers (2) in eine zweite Relativstellung, so daß eine zweite Gürtellage auf dem Gürtellagenzubringer (2) der ersten Hälfte der Gürteltrommel (1) gegenübersteht,
c) gleichzeitiges Auflegen der zweiten Gürtellage auf der ersten Hälfte der Gürteltrommel (1) und einer ersten Gürtellage auf der zweiten Hälfte der Gürteltrommel (1),
d) Verfahren der Gürteltrommel (1) oder des Gürtellagenzubringers (2) in eine dritte Relativstellung, so daß die zweite Gürtellage auf dem Gürtellagenzubringer (2) der zweiten Hälfte der Gürteltrommel (1) gegenübersteht,
e) Abziehen der zweiten Gürtellage vom Gürtellagenzubringer (2) und Auflegen auf der zweiten Hälfte der Gürteltrommel (1),
f) nach dem Auflegen beider Gürtellagen auf beide Hälften der Gürteltrommel (1) erfolgt ein gleichzeitiges Spulen von zwei Wickelbandagen auf den beiden Hälften der Gürteltrommel (1),
g) nach dem Aufbringen der beiden Wickelbandagen werden zwei Laufstreifen nacheinander oder gleichzeitig auf die beiden Hälften der Gürteltrommel (1) aufgebracht,
h) nach der Vervollständigung der beiden Laufstreifen/Gürtelpakete werden beide nacheinander oder gleichzeitig mittels einer Überführungsvorrichtung (5) von der Gürteltrommel (1) entfernt.

2. Verfahren nach Anspruch 1, dadurch gekennzeichnet, daß zur Erzeugung der drei Relativstellungen zwischen dem Gürtellagenzubringer (2) und der Gürteltrommel (1) ausschließlich die Gürteltrommel (1) axial bewegt wird.

3. Verfahren nach Anspruch 1 oder 2, dadurch gekennzeichnet, daß das Spulen der beiden Wickelbandagen in der dritten Relativstellung der Gürteltrommel (1) erfolgt.

4. Verfahren nach Anspruch 1, dadurch gekennzeichnet, daß beide Laufstreifen in der ersten Relativstellung der Gürteltrommel (1) gleichzeitig aufgebracht werden.

5. Verfahren nach Anspruch 1, dadurch gekennzeichnet, daß zunächst ein Laufstreifen in der zweiten Relativstellung der Gürteltrommel (1) und dann der zweite in der ersten Relativstellung der Trommel (1) aufgelegt wird.

6. Vefahren nach Anspruch 1, dadurch gekennzeichnet, daß die Entfernung der beiden Laufstreifen/Gürtelpakete mittels eines Doppeltransferrings erfolgt.

7. Vorrichtung zur Durchführung des Verfahrens nach Anspruch 1, mit einer drehbaren Gürteltrommel (1), mit einem Gürtellagenzubringer (2) für eine erste und eine zweite Gürtellage mit einer Wickelbandagenzuführvorrichtung (3), mit einer Laufstreifenzuführvorrichtung (4) und mit einer Überführungsvorrichtung (5), dadurch gekennzeichnet, daß die Gürteltrommel (1) zur Aufnahme von zwei Laufstreifen/Gürtelpaketen nebeneinander doppelt breit ausgebildet ist, daß die Gürteltrommel (1) oder der Gürtellagenzubringer (2) in drei Relativstellungen zueinander verfahrbar sind, und daß sich in der dritten Relativstellung, die Wickelbandagenzuführvorrichtung (3), die zum gleichzeitigen Zuführen von zwei Wickelbandagen ausgebildet ist, auf Höhe der Gürteltrommel (1) befindet.

8. Vorrichtung nach Anspruch 7, dadurch gekennzeichnet, daß der Gürtellagenzubringer (2) zum gleichseitigen Zuführen einer ersten Gürtellage und einer zweiten Gürtellage ausgebildet ist.

9. Vorrichtung nach Anspruch 7, dadurch gekennzeichnet, daß für eine Relativverschiebung zwischen Gürtellagenzubringer (2) und Gürteltrommel (1) die Gürteltrommel (1) und/oder der Gürtellagenzubringer (2) axial verfahrbar ist.

10. Vorrichtung nach Anspruch 7, dadurch gekennzeichnet, daß die Gürteltrommel (1) axial verfahrbar ist und daß sich auf der einen Seite von ihr der Gürtellagenzubringer (2) ortsfest befindet, während auf der anderen Seite die Wickelbandagenzuführvorrichtung (3) und die Laufstreifenzuführvorrichtung (4) ortsfest angeordnet sind.

11. Verfahren nach Anspruch 1, mit einer drehbaren, axial jedoch ortsfesten Gürteltrommel (1), mit einem axial verfahrbaren Gürtellagenzubringer (2) für eine erste und eine zweite Gürtellage, mit einer ortsfesten Wickelbandagenzuführvorrichtung (3), mit einer ortsfesten Laufstreifenzuführvorrichtung (4) und mit einer Überführungsvorrichtung (5),
dadurch gekennzeichnet, daß
- beim Verfahrensschritt b) der Gürtellagenzubringer (2) verfahren wird,
- beim Verfahrensschritt d) der Gürtellagenzubringer (2) verfahren wird,
- beim Verfahrensschritt g) werden zwei Laufstreifen gleichzeitig auf die beiden Hälften der Gürteltrommel (1) aufgebracht,

12. Vorrichtung zum Durchführen des Verfahrens nach Anspruch 11, mit einer drehbaren, axial jedoch ortsfesten Gürteltrommel (1), mit einem axial verfahrbaren Gürtellagenzubringer (2) für eine erste und eine zweite Gürtellage, mit einer ortsfesten Wickelbandagenzuführvorrichtung (3), mit einer ortsfesten Laufstreifenzuführvorrichtung (4) und mit einer Überführungsvorrichtung (5), dadurch gekennzeichnet, daß die Gürteltrommel (1) zur Aufnahme von zwei Laufstreifen/Gürtelpaketen, nebeneinander doppelt breit ausgebildet ist, daß der Gürtellagenzubringer (2), die Wickelbandagenvorrichtung (3) und die Laufstreifenzuführvorrichtung (4) in axialer Richtung im wesentlichen auf gleicher Höhe zur Wickeltrommel (1) und dann in Umfangsrichtung versetzt zueinander angeordnet sind und daß ausschließlich der Gürtellagenzubringer (2) axial verfahrbar ist.

13. Vorrichtung nach Anspruch 12, dadurch gekennzeichnet, daß die Laufstreifenzuführvorrichtung (4) zum gleichzeitigen Zuführen von zwei Laufstreifen ausgebildet ist.

14. Verfahren zur Herstellung von Laufstreifen/Gürtelpaketen für Fahrzeugluftreifen, mit einer drehbaren, axial jedoch ortsfesten Gürteltrommel (1), mit einem ersten Gürtellagenzubringer (2) für zwei erste Gürtellagen, mit einem zweiten Gürtellagenzubringer (2') für zwei zweite Gürtellagen, mit einer Wickelbandagenzuführvorrichtung (3), mit einer Laufstreifenzuführvorrichtung (4) und mit einer Überführungsvorrichtung (5), gekennzeichnet durch die Schritte
a) Abziehen von zwei ersten Gürtellagen vom ersten Gürtellagenzubringer (2) und Auflegen auf die Gürteltrommel (1), die zur Aufnahme von zwei Laufstreifen/Gürtelpaketen doppelt breit ausgebildet ist.
b) Abziehen von zwei zweiten Gürtellagen vom zweiten Gürtellagenzubringer (2') und Auflegen auf die Gürteltrommel (1),
c) nach dem Auflegen beider Gürtellagen auf beide Hälften der Gürteltrommel (1) erfolgt ein gleichzeitiges Spulen von zwei Wickelbandagen auf den beiden Hälften der Gürteltrommel (1),
d) nach dem Aufbringen der beiden Wickelbandagen werden zwei Laufstreifen nacheinander oder gleichzeitig auf die beiden Hälften der Gürteltrommel (1) aufgebracht,
e) nach der Vervollständigung der beiden Laufstreifen/Gürtelpakete werden beide nacheinander oder gleichzeitig mittels einer Überführungsvorrichtung (5) von der Gürteltrommel (1) entfernt.

15. Vorrichtung zum Durchführen des Verfahrens nach Anspruch 14, mit einer drehbaren, axial jedoch ortsfesten Gürteltrommel (1), mit einem ersten Gürtellagenzubringer (2) für zwei erste Gürtellagen, mit einem zweiten Gürtellagenzubringer (2') für zwei zweite Gürtellagen, mit einer ortsfesten Wickelbandagenzuführvorrichtung (3), mit einer ortsfesten Laufstreifenzuführvorrichtung (4) und mit einer Überführungsvorrichtung (5), dadurch gekennzeichnet, daß die Gürteltrommel (1) zur Aufnahme von zwei Laufstreifen/Gürtelpaketen nebeneinander doppelt breit ausgebildet ist, daß die Gürtellagenzubringer (2, 2'), die Wickelbandagenvorrichtung (3) und die Laufstreifenzuführvorrichtung (4) in axialer Richtung im wesentlichen auf gleicher Höhe zur Wickeltrommel (1) und dann in Umfangsrichtung versetzt zueinander angeordnet sind und daß sowohl die Gürteltrommel (1) wie auch die anderen genannten Einheiten der Vorrichtung in axialer Richtung unverfahrbar sind.

## Claims

1. Method of producing tread strip/belt bundles for pneumatic vehicle tyres, by means of a rotatable belt drum (1), a belt ply feeder (2) for a first and a second belt ply, a helical bandage supplying device (3), a tread strip supplying device (4) and a transfer device (5), characterised by the following steps:
a) removing a first belt ply from the belt ply feeder (2) and placing it on a first half of the belt drum (1) in a first relative position between belt ply feeder (2) and belt drum (1), which drum is configured to be twice as wide in order to accommodate two tread strip/belt bundles,
b) displacing the belt drum (1) or the belt ply feeder (2) into a second relative position, so that a second belt ply on the belt ply feeder (2) lies opposite the first half of the belt drum (1),
c) simultaneously placing the second belt ply on the first half of the belt drum (1) and a first belt ply on the second half of the belt drum (1),
d) displacing the belt drum (1) or the belt ply feeder (2) into a third relative position, so that the second belt ply on the belt ply feeder (2) lies opposite the second half of the belt drum (1),
e) removing the second belt ply from the belt ply feeder (2) and placing it on the second half of the belt drum (1),
f) after both belt plies have been placed on both halves of the belt drum (1), two helical bandages are simultaneously wound on the two halves of the belt drum (1),
g) after the two helical bandages have been applied, two tread strips are applied one after the other or simultaneously to the two halves of the belt drum (1),
h) after the two tread strip/belt bundles have been completed, both bundles are removed from the belt drum (1) one after the other or simultaneously by means of a transfer device (5).

2. Method according to claim 1, characterised in that the belt drum (1) is exclusively axially displaced in order to produce the three relative positions between the belt ply feeder (2) and the belt drum (1).

3. Method according to claim 1 or 2, characterised in that the two helical bandages are wound in the third relative position of the belt drum (1).

4. Method according to claim 1, characterised in that both tread strips are simultaneously applied in the first relative position of the belt drum (1).

5. Method according to claim 1, characterised in that initially one tread strip is applied in the second relative position of the belt drum (1) and then the second tread strip is applied in the first relative position of the drum (1).

6. Method according to claim 1, characterised in that the two tread strip/belt bundles are removed by means of a double transfer ring.

7. Apparatus for accomplishing the method according to claim 1, having a rotatable belt drum (1), a belt ply feeder (2) for a first and a second belt ply, a helical bandage supplying device (3), a tread strip supplying device (4) and a transfer device (5), characterised in that the belt drum (1) is configured to be twice as wide in order to accommodate two tread strip/belt bundles adjacent each other, in that the belt drum (1) or the belt ply feeder (2) are displaceable in three relative positions relative to one another, and in that the helical bandage supplying device (3), which is configured for the simultaneous supplying of two helical bandages, is situated on a level with the belt drum (1) in the third relative position.

8. Apparatus according to claim 7, characterised in that the belt ply feeder (2) is configured for the simultaneous supplying of a first belt ply and a second belt ply.

9. Apparatus according to claim 7, characterised in that the belt drum (1) and/or the belt ply feeder (2) are/is axially displaceable for a relative shift between belt ply feeder (2) and belt drum (1).

10. Apparatus according to claim 7, characterised in that the belt drum (1) is axially displaceable, and in that the belt ply feeder (2) is situated in a stationary manner on one side of said drum, while the helical bandage supplying device (3) and the tread strip supplying device (4) are disposed in a stationary manner on the other side.

11. Method according to claim 1, using a rotatable, but axially stationary belt drum (1), an axially displaceable belt ply feeder (2) for a first and a second belt ply, a stationary helical bandage supplying device (3), a stationary tread strip supplying device (4) and a transfer device (5), characterised in that
- the belt ply feeder (2) is displaced in method step b),
- the belt ply feeder (2) is displaced in method step d), and
- two tread strips are simultaneously applied to the two halves of the belt drum (1) in method step g).

12. Apparatus for accomplishing the method according to claim 11, having a rotatable, but axially stationary belt drum (1), an axially displaceable belt ply feeder (2) for a first and a second belt ply, a stationary helical bandage supplying device (3), a stationary tread strip supplying device (4) and a transfer device (5), characterised in that the belt drum (1) is configured to be twice as wide in order to accommodate two tread strip/belt bundles adjacent each other, in that the belt ply feeder (2), the helical bandage supplying device (3) and the tread strip supplying device (4) are disposed on substantially the same level as the belt drum (1) in the axial direction and then offset relative to one another in the circumferential direction, and in that the belt ply feeder (2) is exclusively axially displaceable.

13. Apparatus according to claim 12, characterised in that the tread strip supplying device (4) is configured for the simultaneous supplying of two tread strips.

14. Method of producing tread strip/belt bundles for pneumatic vehicle tyres, by means of a rotatable, but axially stationary belt drum (1), a first belt ply feeder (2) for two first belt plies, a second belt ply feeder (2') for two second belt plies, a helical bandage supplying device (3), a tread strip supplying device (4) and a transfer device (5), characterised by the following steps:
a) removing two first belt plies from the first belt ply feeder (2) and placing them on the belt drum (1), which is configured to be twice as wide in order to accommodate two tread strip/belt bundles,
b) removing two second belt plies from the second belt ply feeder (2') and placing them on the belt drum (1),
c) after both belt plies have been placed on both halves of the belt drum (1), two helical bandages are simultaneously wound on the two halves of the belt drum (1),
d) after the two helical bandages have been applied, two tread strips are applied one after the other or simultaneously to the two halves of the belt drum (1),
e) after the two tread strip/belt bundles have been completed, both bundles are removed from the belt drum (1) one after the other or simultaneously by means of a transfer device (5).

15. Apparatus for accomplishing the method according to claim 14, having a rotatable, but axially stationary belt drum (1), a first belt ply feeder (2) for two first belt plies, a second belt ply feeder (2') for two second belt plies, a stationary helical bandage supplying device (3), a stationary tread strip supplying device (4) and a transfer device (5), characterised in that the belt drum (1) is configured to be twice as wide in order to accommodate two tread strip/belt bundles adjacent each other, in that the belt ply feeders (2, 2'), the helical bandage supplying device (3) and the tread strip supplying device (4) are disposed on substantially the same level as the belt drum (1) in the axial direction and then offset relative to one another in the circumferential direction, and in that both the belt drum (1) and the other above-mentioned units of the apparatus are non-displaceable in the axial direction.

## Revendications

1. Procédé de fabrication d'ensembles bandes de roulement/paquets ceintures pour pneumatiques de véhicules, avec un tambour à ceinture (1) rotatif, avec un alimentateur en couches de ceinture (2), fournissant une première et une deuxième couches de ceinture, avec un dispositif d'amenée de bandage à enrouler (3), avec un dispositif d'amenée de bandes de roulement (4) et avec un dispositif de transfert (5), caractérisé par les étapes consistant :
a) à extraire une première couche de ceinture de l'alimentateur à couches de ceinture (2) et à la poser sur une première moitié du tambour à ceinture (1), dans une première position relative entre l'alimentateur à couches de ceinture (2) et le tambour à ceinture (1), réalisé avec une largeur doublée pour recevoir deux ensembles de bandes de roulement/paquet de ceintures,
b) à déplacer le tambour à ceinture (1) ou l'alimentateur à couches de ceinture (2) dans une deuxième position relative, de manière qu'une deuxième couche de ceinture située sur l'alimentateur à couches de ceinture (2) soit placé en regard de la deuxième moitié du tambour à ceinture (1),
c) à poser simultanément la deuxième couche de ceinture sur la première moitié du tambour à ceinture (1) et une première couche de ceinture sur la deuxième moitié du tambour à ceinture (1),
d) à déplacer le tambour à ceinture (1) ou l'alimentateur à couches de ceinture (2) dans une troisième position relative, de manière que la deuxième couche de ceinture se trouvant sur l'alimentateur à couches de ceinture (2) soit placée en regard de la deuxième moitié du tambour à ceinture (1),
e) à extraire la deuxième couche de ceinture de l'alimentateur à couches de ceinture (2) et à l'appliquer sur la deuxième moitié du tambour à ceinture (1),
f) à effectuer, après pose des couches de ceinture sur les deux moitiés du tambour de ceinture (1), un bobinage simultané de deux bandages sur les deux moitiés du tambour à ceinture (1),
g) après application des deux bandages à enrouler, à appliquer deux bandes de roulement l'une après l'autre ou simultanément sur les deux moitiés du tambour à ceinture (1),
h) après réalisation des deux ensembles à bandes de roulement/paquets de ceintures, à enlever du tambour à ceinture (1) ces deux ensembles, l'un après l'autre ou bien simultanément au moyen d'un dispositif de transfert (5).

2. Procédé selon la revendication 1, caractérisé en ce qu'exclusivement le tambour à ceinture (1) est déplacé axialement pour produire les trois positions relatives entre l'alimentateur à couches de ceinture (2) et le tambour à ceinture (1).

3. Procédé selon la revendication 1 ou la revendication 2, caractérisé en ce que le bobinage des deux bandages s'effectue dans la troisième position relative du tambour à ceinture (1).

4. Procédé selon la revendication 1, caractérisé en ce que les deux bandes de roulement sont appliquées simultanément, dans la première position relative du tambour à ceinture (1).

5. Procédé selon la revendication 1, caractérisé en ce qu'on applique d'abord une bande de roulement dans la deuxième position relative du tambour à ceinture (1), puis on effectue une application de la deuxième bande de roulement, dans la première position relative du tambour (1).

6. Procédé selon la revendication 1, caractérisé en ce que l'enlèvement des deux ensembles de bandes de roulement/paquets de ceintures s'effectue au moyen d'un anneau de transfert double.

7. Dispositif de mise en oeuvre du procédé selon la revendication 1, avec un tambour à ceinture (1) rotatif, avec un alimentateur à couches de ceinture (2), fournissant une première et une deuxième couches de ceinture avec un dispositif d'amenée de bandage à enrouler (3), avec un dispositif d'amenée de bande de roulement (4) et avec un dispositif de transfert (5), caractérisé en ce que le tambour à ceinture (1) est constitué avec une largeur double, pour recevoir l'un à côté de l'autre deux ensembles bandes de roulement/paquets de ceintures, en ce que le tambour à ceinture (1) ou l'alimentateur à couches de ceinture (2) est susceptible d'être déplacé dans trois positions relatives les unes par rapport aux autres, et en ce que, dans la troisième position relative, le dispositif d'amenée de bandage à enrouler (3), réalisé pour amener simultanément deux bandages à enrouler, se trouve au niveau du tambour à ceinture (1).

8. Dispositif selon la revendication 7, caractérisé en ce que l'alimentateur à couches de ceinture (2) est réalisé pour amener simultanément une première couche de ceinture et une deuxième couche de ceinture.

9. Dispositif selon la revendication 7, caractérisé en ce que le tambour à ceinture (1) et/ou l'alimentateur, à couches de ceinture (2) est (sont) déplaçable(s) axialement, pour produire un déplacement relatif entre l'alimentateur à couches de ceinture (2) et le tambour à ceinture (1).

10. Dispositif selon la revendication 7, caractérisé en ce que le tambour à ceinture (1) est déplaçable axialement et en ce que l'alimentateur à couches de ceinture (2) se trouve localement fixe, sur un côté du tambour, tandis que, de l'autre côté, sont disposés localement fixe le dispositif d'amenée de bandage à enrouler (3) et le dispositif d'amenée de bande de roulement (4).

11. Procédé selon la revendication 1, avec un tambour à ceinture (1) rotatif mais cependant fixe axialement, avec un alimentateur à couches de ceinture (2) déplaçable axialement, pour fournir une première et une deuxième couches de ceinture, avec un dispositif d'amenée de bandage à enrouler (3) localement fixe, avec un dispositif d'amenée de bande de roulement (4) localement fixe et avec un dispositif de transfert (5),
caractérisé en ce que
- lors de l'étape de procédé b), l'alimentateur à couches de ceinture (2) est déplacé,
- lors de l'étape de procédé d) l'alimentateur à couches de ceinture (2) est déplacé
- lors de l'étape de procédé g) deux bandes de roulement sont appliquées simultanément sur les deux moitiés du tambour à ceinture (1).

12. Dispositif de mise en oeuvre du procédé selon la revendication 11, avec un tambour à ceinture (1) susceptible de tourner en étant cependant fixe axialement, avec un alimentateur à couches de ceinture (2) déplaçable axialement, pour fournir une première et une deuxième couches de ceinture avec un dispositif d'amenée de bandage à enrouler (3), avec un dispositif d'amenée de bande de roulement (4) fixe et avec un dispositif de transfert (5), caractérisé en ce que le tambour à ceinture (1) est de largeur double, pour recevoir l'un à coté de l'autre deux ensembles de bande de roulement/paquets de ceinture, en ce que l'alimentateur à couches de ceinture (2), le dispositif d'amenée de bandage à enrouler (3) et le dispositif d'amenée de bande de roulement (4) sont disposés les uns par rapport aux autres en direction axiale sensiblement au même niveau que le tambour d'enroulement (1), puis décalés en direction périphérique, et en ce que le déplacement axial concerne exclusivement l'alimentateur à couches de ceinture (2).

13. Dispositif selon la revendication 12, caractérisé en ce que le dispositif amenée de bande de roulement (4) est réalisé pour amener simultanément deux bandes de roulement.

14. Procédé de fabrication d'ensemble de bandes de roulement/paquets de ceinture pour des pneumatiques pour véhicules, avec un tambour à ceinture (1) rotatif, cependant fixe axialement, avec un premier alimentateur à couches de ceinture (2) conçu pour deux premières couches de ceinture, avec un deuxième alimentateur à couches de ceinture (2') conçu pour deux deuxième couches de ceinture, avec un dispositif d'amenée de bandage à enrouler (3), avec un dispositif d'amenée de bande de roulement (4) et avec un dispositif de transfert (5), caractérisé par les étapes consistant :
a) à extraire deux première couches de ceinture du premier alimentateur à couches de ceinture (2) et à les appliquer sur le tambour à ceinture (1), réalisé d'une largeur double pour recevoir deux ensembles bandes de roulement/paquets de ceinture,
b) à extraire deux deuxième couches de ceinture du deuxième alimentateur à couches de ceinture (2') et à les poser sur le tambour à ceinture (1),
c) après application des deux couches de ceinture sur les deux moitiés du tambour à ceinture (1), à effectuer un bobinage simultané de deux bandages à enrouler sur les deux moitiés du tambour à ceinture (1),
d) après application des deux bandages à enrouler, à appliquer deux bandes de roulement l'une après l'autre ou simultanément sur les deux moitiés du tambour à ceinture (1),
e) après constitution des deux ensembles de bandes de roulement/paquets de ceinture, à enlever du tambour à ceinture (1) ces deux ensembles, l'un après l'autre ou bien simultanément, au moyen d'un dispositif de transfert (5).

15. Dispositif de mise en oeuvre du procédé selon la revendication 14, avec un tambour à ceinture (1) rotatif cependant fixe axialement, avec un premier alimentateur à couches de ceinture (2) pour deux premier couches de ceinture, avec un deuxième alimentateur à couches de ceinture (2') pour deux deuxième couche de ceinture, avec un dispositif d'amenée de bandage à enrouler (3) fixe, avec un dispositif d'amenée de bande de roulement (4) fixe et avec un dispositif de transfert (5), caractérisé en ce que le tambour de ceinture est de largeur double, pour recevoir l'un à coté de l'autre deux ensembles bandes de roulement/paquets de ceinture, en ce que les alimentateurs à couches de ceinture (2, 2'), le dispositif d'amenée de bandage à enrouler (3) et le dispositif d'amenée de bandes de roulement (4) sont disposés les uns par rapport aux autres en direction axiale sensiblement au même niveau par rapport au tambour d'enroulement (1), puis décalés en direction périphérique, et en ce que, tant le tambour à ceinture (1) qu'également les autres ensembles cités dit dispositif ne peuvent effectuer de déplacement en direction axiale.
